# EUROPEAN PATENT APPLICATION

(11) **EP 4 105 869 A1**
(43) Date of publication of application: **21.12.2022**
(21) Application number: 20918850.7
(22) Date of filing: 28.12.2020
(51) Int. Cl.: G06Q 30/02

(54) **METHOD AND APPARATUS FOR OUTPUTTING INFORMATION**

(30) Priority: 12.02.2020 CN 202010089212
(71) Applicant: Beijing Wodong Tianjun Information Technology Co., Ltd., 100176 Beijing (CN); Beijing Jingdong Century Trading Co., Ltd., Beijing 100176 (CN)
(72) Inventor: ZHU, Guangming, Beijing 100176 (CN); ZHANG, Wei, Beijing 100176 (CN); SHANG, Xin, Beijing 100176 (CN); CHANG, Zilian, Beijing 100176 (CN); ZHANG, Chenjie, Beijing 100176 (CN); SI, Xiaoting, Beijing 100176 (CN); HUANG, Yijun, Beijing 100176 (CN); ZHU, Jianhua, Beijing 100176 (CN); YANG, Fan, Beijing 100176 (CN)
(74) Representative: Mewburn Ellis LLP
(86) International application number: PCT/CN2020/140160
(87) International publication number: WO 2021/159871

(57) **Abstract**

A method and a device for outputting information. The method comprises: in response to receiving an item addition request sent by a user, acquiring a base item contained in the item addition request (201); acquiring a candidate item set; acquiring associated items of the base item from the candidate item set to form an associated item set (203); and acquiring an initial item combination, and executing the following processing steps (204): selecting an item from the candidate item set and adding same to the initial item combination, so as to obtain a first item combination; and on the basis of the first item combination, executing the following processing sub-steps (2042): deleting an item from the first item combination, so as to obtain an intermediate item combination (20421 ); selecting an item from the associated item set and adding same to the intermediate item combination, so as to obtain a second item combination; selecting a result item combination from the first item combination and the second item combination (20423); and in response to the result item combination satisfying preset conditions, outputting the result item combination (20425). The method can increase the efficiency and degree of automation of order generation.

## Description

The present patent application claims priority to Chinese Patent Application No. 202010089212.7, filed on February 12, 2020 by the applicants BEIJING WODONG TIANJUN INFORMATION TECHNOLOGY CO., LTD and BEIJING JINGDONG CENTURY TRADING CO., LTD., and entitled "METHOD AND APPARATUS FOR OUTPUTTING INFORMATION", the entire contents of which are incorporated herein by reference.

### TECHNICAL FIELD

Embodiments of the present disclosure relate to a technical field of computers, and in particular, to a method and apparatus for outputting information.

### BACKGROUND

At present, in online shopping platforms, flexible and numerous special promotion approaches for commodities, e.g., money off and coupon, are available.

In practice, a single commodity generally will not reach a threshold condition for activating a discount. Therefore, in order to participate in a promotion or discount, a consumer needs to manually add, after adding a commodity that he/she desires to purchase, an add-on item from numerous commodity pools to satisfy the promotion threshold.

### SUMMARY

Embodiments of the present disclosure present a method for outputting information and an apparatus for outputting information.

In a first aspect, an embodiment of the present disclosure provides a method for outputting information, including: acquiring, in response to receiving a commodity adding request sent by a user for a participation condition of a target promotion, a basic commodity included in the commodity adding request; acquiring a predetermined candidate commodity set participating in the target promotion; acquiring associated commodities associated with the basic commodity from the candidate commodity set to form an associated commodity set; and acquiring a preset initial commodity combination, and executing the following processing steps: selecting a candidate commodity from the candidate commodity set and adding the selected candidate commodity to the initial commodity combination to obtain a first commodity combination, such that an order including the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order including the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

In some embodiments, the processing steps further include: using, in response to the result commodity combination failing to satisfy the preset condition, the result commodity combination as a new first commodity combination, and continuing to execute the processing sub-steps by using the new first commodity set.

In some embodiments, the acquiring the associated commodities associated with the basic commodity from the candidate commodity set to form the associated commodity set includes: determining a category of the basic commodity; and acquiring commodities corresponding to a category associated with the category of the basic commodity from the candidate commodity set to form the associated commodity set.

In some embodiments, the acquiring the associated commodities associated with the basic commodity from the candidate commodity set to form the associated commodity set includes: acquiring an associated commodity cluster corresponding to the basic commodity from a preset associated commodity cluster set, for using as a target associated commodity cluster, where the preset associated commodity cluster set is a set composed of associated commodity clusters predetermined based on an order information set within a target historical period; and acquiring commodities belonging to the candidate commodity set from the target associated commodity cluster to form the associated commodity set.

In some embodiments, an associated commodity cluster in the preset associated commodity cluster set is obtained through the following steps: acquiring the order information set within the target historical period; generating an undirected weighted graph based on the acquired order information set, where the undirected weighted graph includes nodes and edges for connecting the nodes, the node is used for representing a commodity in an order, and an edge is used for representing that at least one user ordered two commodities connected by the edge within the target historical period, and a weight of the edge is determined based on the number of the two commodities ordered by the user; executing the following retrieve steps based on the undirected weighted graph: retrieving a complete subgraph from the undirected weighted graph, where any two nodes among nodes included in the complete subgraph are connected by an edge; removing the found complete subgraph from the undirected weighted graph to obtain a new undirected weighted graph; determining whether the new undirected weighted graph includes a complete subgraph; and using, in response to the new undirected weighted graph including no complete subgraph, the found complete subgraph to form a complete subgraph set; continuing, in response to the new undirected weighted graph including a complete subgraph, to execute the re steps based on the new undirected weighted graph; and using, for a complete subgraph in the formed complete subgraph set, commodities corresponding to the nodes in the complete subgraph to form the associated commodity cluster.

In some embodiments, the determining whether the result commodity combination satisfies the preset condition includes: determining an association degree value for representing an association degree between a commodity in the result commodity combination and the basic commodity; and determining whether the result commodity combination satisfies the preset condition based on the determined association degree value.

In some embodiments, before the determining whether the result commodity combination satisfies the preset condition, the processing sub-steps further include: determining a quality value for representing a quality of the commodity in the result commodity combination; and the determining whether the result commodity combination satisfies the preset condition includes: determining whether the result commodity combination satisfies the preset condition based on the determined association degree value and the determined quality value.

In a second aspect, an embodiment of the present disclosure provides an apparatus for outputting information, including: a first acquiring unit configured to acquire, in response to receiving a commodity adding request sent by a user for a participation condition of a target promotion, a basic commodity included in the commodity adding request; a second acquiring unit configured to acquire a predetermined candidate commodity set participating in the target promotion; a third acquiring unit configured to acquire associated commodities associated with the basic commodity from the candidate commodity set to form an associated commodity set; and a processing unit configured to acquire a preset initial commodity combination, and execute the following processing steps: selecting a candidate commodity from the candidate commodity set and adding the selected candidate commodity to the initial commodity combination to obtain a first commodity combination, such that an order including the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order including the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

In a third aspect, an embodiment of the present disclosure provides a server, including: one or more processors; and a storage apparatus, storing one or more programs thereon, where the one or more programs, when executed by the one or more processors, cause the one or more processors to implement the method in any one of the above embodiments of the method for outputting information.

In a fourth aspect, an embodiment of the present disclosure provides a computer readable medium, storing a computer program thereon, where the program, when executed by a processor, implements the method in any one of the above embodiments of the method for outputting information.

In the method and apparatus for outputting information provided in embodiments of the present disclosure in response to receiving a commodity adding request sent by a user for a participation condition of a target promotion, a basic commodity included in the commodity adding request is acquired, then a predetermined candidate commodity set participating in the target promotion is acquired, next associated commodities associated with the basic commodity from the candidate commodity set is acquired to form an associated commodity set, and then a preset initial commodity combination is acquired, and the following processing steps are executed: selecting a candidate commodity from the candidate commodity set and adding the selected candidate commodity to the initial commodity combination to obtain a first commodity combination, such that an order including the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order including the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition. As such, a commodity combination satisfying the preset condition is determined for the user based on the basic commodity of the user by iteration, thus reducing human resource consumption, improving an efficiency and automation degree of order generation. Further, a commodity associated with the basic commodity selected by the user is added to the commodity combination, and thus a commodity combination better satisfying the user preference can be generated, facilitating to improve a conversion rate of the commodity combination recommended to the user.

### BRIEF DESCRIPTION OF THE DRAWINGS

After reading detailed descriptions of non-limiting embodiments with reference to the following accompanying drawings, other features, objectives, and advantages of the present disclosure will become more apparent.
Fig. 1 is a diagram of an exemplary system architecture in which an embodiment of the present disclosure may be implemented;
Fig. 2 is a flowchart of a method for outputting information according to an embodiment of the present disclosure;
Fig. 3 is a schematic diagram of an application scenario of the method for outputting information according to an embodiment of the present disclosure;
Fig. 4 is a flowchart of the method for outputting information according to another embodiment of the present disclosure;
Fig. 5 is an exemplary diagram of retrieving a complete subgraph from a wireless weighted graph according to a method for generating a preset associated commodity cluster of the present disclosure;
Fig. 6 is a schematic structural diagram of an apparatus for outputting information according to an embodiment of the present disclosure; and
Fig. 7 is a schematic structural diagram of a computer system adapted to implement a server of embodiments of the present disclosure.

### DETAILED DESCRIPTION OF EMBODIMENTS

The present disclosure will be further described in detail below in combination with the accompanying drawings and the embodiments. It should be understood that the specific embodiments described here are merely used for explaining the relevant disclosure, rather than limiting the disclosure. In addition, it should be further noted that, for ease of description, only the portions related to the relevant disclosure are shown in the accompanying drawings.

It should be noted that the embodiments in the present disclosure and the features in the embodiments may be combined with each other on a non-conflict basis. The present disclosure will be described in detail below with reference to the accompanying drawings and in combination with the embodiments.

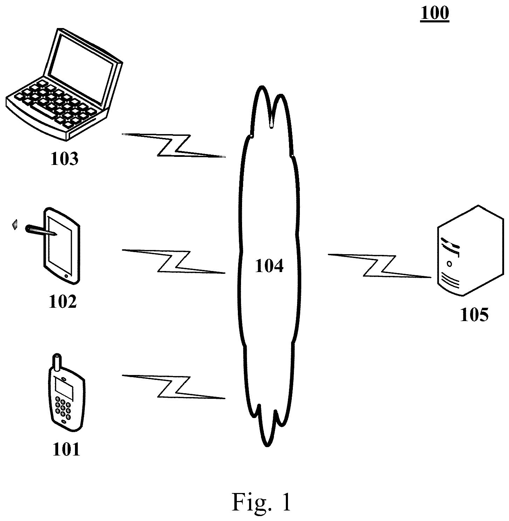

Fig. 1 shows an exemplary system architecture 100 in which a method for outputting information or an apparatus for outputting information of an embodiment of the present disclosure may be implemented.

As shown in Fig. 1, the system architecture 100 may include terminal devices 101, 102, and 103, a network 104, and a server 105. The network 104 serves as a medium providing a communication link between the terminal devices 101, 102, and 103, and the server 105. The network 104 may include various types of connections, such as wired or wireless communication links, or optical cables.

A user may interact with the server 105 using the terminal devices 101, 102, and 103 via the network 104, e.g., to receive or send a message. The terminal devices 101, 102, and 103 may be provided with various communication client applications, such as a shopping application, a web browser application, a search application, an instant messaging tool, an email client, and social platform software.

The terminal devices 101, 102, and 103 may be hardware, or may be software. When the terminal devices 101, 102 and 103 are hardware, the terminal devices may be various electronic devices having a display screen and supporting web browsing, including but not limited to a smart phone, a tablet computer, an e-book reader, an MP3 (Moving Picture Experts Group Audio Layer III) player, an MP4 (Moving Picture Experts Group Audio Layer IV) player, a laptop portable computer, a desktop computer, and the like. When the terminal devices 101, 102, and 103 are software, the terminal devices may be installed in the above-listed electronic devices, may be implemented as a plurality of software programs or software modules (e.g., a plurality of software programs or software modules configured to provide distributed services), or may be implemented as a single software program or software module. This is not specifically limited here.

The server 105 may be a server providing various services, such as a back-end server providing support for the shopping application installed on the terminal devices 101, 102, and 103. The back-end server may process, e.g., analyze, data such as a received commodity adding request, and return a processing result (e.g., a result commodity combination) to the terminal devices.

It should be noted that the method for outputting information provided in embodiments of the present disclosure is generally executed by the server 105. Accordingly, the apparatus for outputting information is generally provided in the server 105.

It should be noted that the server may be hardware, or may be software. When the server is hardware, the server may be implemented as a distributed server cluster composed of a plurality of servers, or may be implemented as a single server. When the server is software, the server may be implemented as a plurality of software programs or software modules (e.g., a plurality of software programs or software modules for providing distributed services), or may be implemented as a single software program or software module. This is not specifically limited here.

It should be understood that the numbers of terminal devices, networks, and servers in Fig. 1 are merely illustrative. Any number of terminal devices, networks, and servers may be provided based on actual requirements.

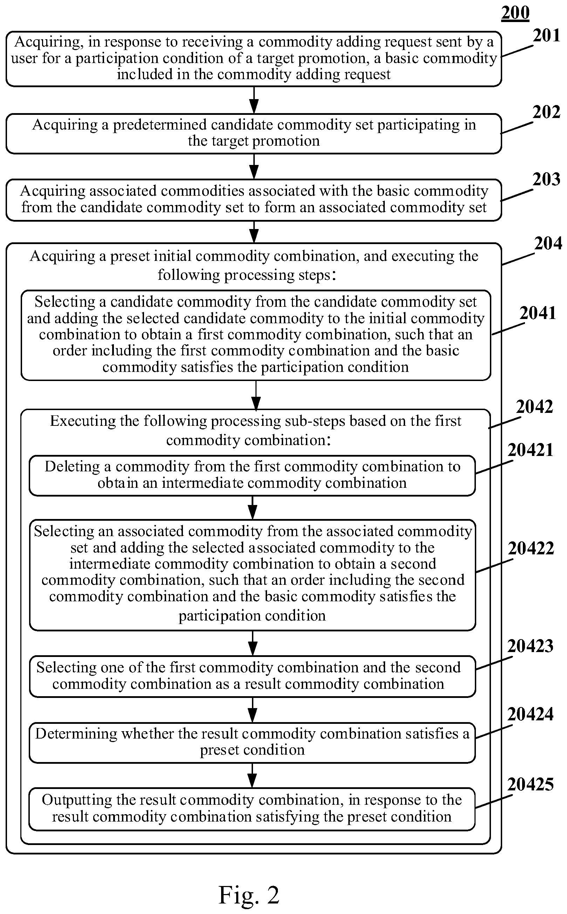

Further referring to Fig. 2, a process 200 of a method for outputting information according to an embodiment of the present disclosure is shown. The method for outputting information includes the following steps.

Step 201: acquiring, in response to receiving a commodity adding request sent by a user for a participation condition of a target promotion, a basic commodity included in the commodity adding request.

In the present embodiment, an executing body (e.g., the server shown in Fig. 1) of the method for outputting information may acquire, in response to receiving the commodity adding request sent by the user for the participation condition of the target promotion through a wired connection or a wireless connection, the basic commodity included in the commodity adding request.

In practice, a shopping platform or merchant may plan a promotion to promote commodities. When a promotion (such as a mid-year money-off promotion) is planned, a participation condition (for example, a total order price being CNY 199 or more) will generally be determined. Then, when commodities ordered by the user satisfy the participation condition (i.e., CNY 199 or more), the order may enjoy a corresponding discount (for example, CNY 100 off).

In the present embodiment, the target promotion may be a promotion in which the basic commodity is currently participating. The basic commodity may be a commodity that the user desires to order. Specifically, the basic commodity may be a commodity on a commodity page currently browsed by the user using a user terminal, or may be a commodity added to a shopping cart by the user. The participation condition of the target promotion may be a predetermined condition for the target promotion. For example, the participation condition may be the total order price being CNY 199 or more, or the total order price being CNY 199 or more and the number of commodities included in the order is greater than or equal to 2. The commodity adding request includes the basic commodity, and is used to request the executing body to add a further commodity to the order including the basic commodity, such that the order obtained after adding the further commodity satisfies the participation condition of the target promotion.

In practice, the user may send the commodity adding request to the executing body using the user terminal by various approaches. Specifically, as an example, the user may use the user terminal to click on a link or button that is preset on the commodity page of the basic commodity and is used for indicating the target promotion, so as to send the commodity adding request to the executing body. Alternatively, the user may use the user terminal to click on a link or button that is preset in an area, where the basic commodity is located, on a shopping cart page and is used for indicating the target promotion, so as to send the commodity adding request to the executing body.

It is understandable that, in practice, above operations performed by the executing body on an entity such as a commodity are substantially operations performed on a predetermined identifier for representing, e.g., the commodity. For example, the acquiring the basic commodity is substantially acquiring a commodity number of the basic commodity. In the present disclosure, an operation such as "acquiring the commodity number of the basic commodity" is described as, e.g., "acquiring the basic commodity", which is a drafting way used for ease of expression, and should not be regarded as a limitation to the present disclosure.

Step 202: acquiring a predetermined candidate commodity set participating in the target promotion.

In the present embodiment, the executing body may acquire the candidate commodity set participating in the target promotion remotely or locally through a wired connection or a wireless connection. The candidate commodity set may be a commodity set predetermined for the target promotion.

In practice, when a commodity in the order is a candidate commodity in the candidate commodity set, and the order satisfies the participation condition, the order may enjoy the discount.

Step 203: acquiring associated commodities associated with the basic commodity from the candidate commodity set to form an associated commodity set.

In the present embodiment, based on the basic commodity obtained in step 201 and the candidate commodity set obtained in step 202, the executing body may acquire the associated commodities associated with the basic commodity from the candidate commodity set to form the associated commodity set. The associated commodities associated with the basic commodity may be commodities that have an association with the basic commodity, for example, commodities used together with the basic commodity.

Specifically, the executing body may acquire the associated commodity set by various approaches.

In some optional implementations of the present embodiment, the executing body may acquire the associated commodity set through the following steps. First, the executing body may determine a category of the basic commodity. Then, the executing body may acquire commodities corresponding to a category associated with the category of the basic commodity from the candidate commodity set to form the associated commodity set.

As an example, the shopping platform or merchant may pre-establish an associated commodity category information table corresponding to associated commodity categories, and then the executing body may acquire, based on the associated commodity category information table, the commodities corresponding to a category associated with the category of the basic commodity from the candidate commodity set, to form the associated commodity set. Alternatively, the shopping platform or merchant may predetermine a category with three levels of each commodity, and then the executing body may determine the category with three levels of the basic commodity (for example, life-electronics-accessory), and then acquire the commodities corresponding to a category with three levels associated with the category with three levels of the basic commodity from the candidate commodity set, to form the associated commodity set. Here, it should be noted that the association for the category with three levels may include various circumstances. For example, the circumstances may include a circumstance in which all categories contained in the category with three levels are identical, or a circumstance in which the first two levels of categories contained in the category with three levels are identical. This is not limited in this example, and may be set based on actual requirements.

Step 204: acquiring a preset initial commodity combination, and executing the following processing steps.

In the present embodiment, the executing body may acquire the preset initial commodity combination, and execute the following processing steps (from step 2041 to step 2042).

Step 2041: selecting a candidate commodity from the candidate commodity set and adding the selected candidate commodity to the initial commodity combination to obtain a first commodity combination, such that an order including the first commodity combination and the basic commodity satisfies the participation condition.

In the present embodiment, the executing body may select, based on the candidate commodity set obtained in step 202 and the above initial commodity combination, a candidate commodity from the candidate commodity set and add the selected candidate commodity to the initial commodity combination to obtain the first commodity combination, such that the order including the first commodity combination and the basic commodity satisfies the participation condition corresponding to the target promotion. The initial commodity combination may be a preset combination. Specifically, a technician may preset the initial commodity combination to include no commodity, or may preset the initial commodity combination to include a preset commodity.

In practice, the executing body may successively select candidate commodities from the candidate commodity set and add the selected candidate commodities to the initial commodity set. Each time after a candidate commodity is added, the executing body may determine whether an order composed of the initial commodity combination obtained after the candidate commodity being added and the basic commodity satisfies the participation condition corresponding to the target promotion. The executing body may determine, if the order composed of the initial commodity combination obtained after the candidate commodity being added and the basic commodity satisfies the participation condition corresponding to the target promotion, the initial commodity combination obtained after the candidate commodity being added this time as the first commodity combination. The executing body may, if the order composed of the initial commodity combination obtained after the candidate commodity being added and the basic commodity fails to satisfy the participation condition corresponding to the target promotion, continue to select a candidate commodity from the candidate commodity set and add the selected candidate commodity to the initial commodity set until the participation condition is satisfied. Finally, the first commodity combination can be obtained.

Step 2042: executing the following processing sub-steps based on the first commodity combination.

In the present embodiment, the executing body may execute the following processing sub-steps (from step 20421 to step 20425) based on the first commodity combination obtained in step 2041.

Step 20421: deleting a commodity from the first commodity combination to obtain an intermediate commodity combination.

In the present embodiment, the executing body may select a commodity from the first commodity combination and delete the selected commodity to obtain the intermediate commodity combination.

Specifically, the executing body may select a commodity from the first commodity combination by various approaches and delete the selected commodity. As an example, the executing body may randomly select a commodity from the first commodity combination and delete the selected commodity. Alternatively, the executing body may delete, from the first commodity combination, a commodity with a different category from the basic commodity.

It should be noted that the number of commodities deleted from the first commodity combination may be predetermined (e.g., one), or may be determined based on the first commodity combination (e.g., the number of deleted commodities is half of the number of commodities included in the first commodity combination).

Step 20422: selecting an associated commodity from the associated commodity set and adding the selected associated commodity to the intermediate commodity combination to obtain a second commodity combination, such that an order including the second commodity combination and the basic commodity satisfies the participation condition.

In the present embodiment, the executing body may select, based on the associated commodity set obtained in step 203 and the above intermediate commodity combination, an associated commodity from the associated commodity set and add the selected associated commodity to the intermediate commodity combination to obtain the second commodity combination, such that the order including the second commodity combination and the basic commodity satisfies the participation condition corresponding to the target promotion.

In practice, the executing body may successively select associated commodities from the associated commodity set and add the selected associated commodities to the intermediate commodity set. Each time after an associated commodity is added, the executing body may determine whether an order composed of the intermediate commodity combination obtained after the associated commodity being added and the basic commodity satisfies the participation condition corresponding to the target promotion. The executing body may determine, if the order composed of the intermediate commodity combination obtained after the associated commodity being added and the basic commodity satisfies the participation condition corresponding to the target promotion, the intermediate commodity combination obtained after the associated commodity being added this time as the second commodity combination. The executing body may continue, if the order composed of the intermediate commodity combination obtained after the associated commodity being added and the basic commodity fails to satisfy the participation condition corresponding to the target promotion, to select an associated commodity from the associated commodity set and add the selected associated commodity to the intermediate commodity set until the participation condition is satisfied. Finally, the second commodity combination can be obtained.

It is understandable that, compared with the first commodity combination, the second commodity combination may include an associated commodity associated with the basic commodity.

Step 20423: selecting one of the first commodity combination and the second commodity combination as a result commodity combination.

In the present embodiment, the executing body may select one of the latest first commodity combination and second commodity combination by various approaches as the result commodity combination.

Specifically, as an example, the executing body may determine a total price of the first commodity combination and a total price of the second commodity combination. If the total price of the second commodity combination is less than or equal to the total price of the first commodity combination, the executing body may select the second commodity combination as the result commodity combination. If the total price of the second commodity combination is greater than the total price of the first commodity combination, and a difference between the total price of the second commodity combination and the total price of the first commodity combination is less than or equal to a preset threshold, the executing body may select the second commodity combination as the result commodity combination. If the total price of the second commodity combination is greater than the total price of the first commodity combination, and a difference between the total price of the second commodity combination and the total price of the first commodity combination is greater than the preset threshold, the executing body may select the first commodity combination as the result commodity combination.

As another example, the executing body may determine the total price of the first commodity combination and the total price of the second commodity combination, and determine an association degree value for representing an association degree between the first commodity combination and the basic commodity, and an association degree value for representing an association degree between the second commodity combination and the basic commodity. Then, the executing body may perform a summing calculation on the total price and the association degree value of the first commodity combination to obtain a first result; and perform a summing calculation on the total price and the association degree value of the second commodity combination to obtain a second result. Finally, the executing body may select a commodity combination corresponding to a result with a larger value from the first result and the second result as the result commodity combination.

It should be noted that, here, the executing body may determine an association degree value for representing an association degree between a commodity combination (including the first commodity combination and the second commodity combination) and the basic commodity by various approaches. For example, for a commodity with a category that is identical to the category with three levels of the basic commodity, a technician may preset a corresponding association degree value to 3. For a commodity with a category with three levels in which two levels of categories are identical to those in the category with three levels of the basic commodity, a technician may preset a corresponding association degree value to 2. For a commodity with a category with three levels in which one level of category is identical to that in the category with three levels of the basic commodity, a technician may preset a corresponding association degree value to 1. For a commodity with a category with three levels in which any level of category is not identical with that in the category with three levels of the basic commodity, a technician may preset a corresponding association degree value to 0. Then, the executing body may first determine an association degree value between each commodity in the first commodity combination and the second commodity combination and the basic commodity based on a content preset by the above technician. After that, the executing body may sum association degree values of commodities in the first commodity combination to obtain an association degree value corresponding to the first commodity combination; and sum association degree values of commodities in the second commodity combination to obtain an association degree value corresponding to the second commodity combination.

Step 20424: determining whether the result commodity combination satisfies a preset condition.

In the present embodiment, the executing body may determine whether the result commodity combination satisfies the preset condition based on the result commodity combination obtained in step 20423. The preset condition may be various conditions preset by a technician. Specifically, as an example, the preset condition may be that an association degree value corresponding to the result commodity combination is greater than or equal to a preset association degree threshold; or may be that a difference between an association degree value of the result commodity combination obtained this time and an association degree value of the result commodity combination obtained last time is less than or equal to a preset difference value (if the difference between the association degree value of the result commodity combination obtained this time and the association degree value of the result commodity combination obtained last time is less than or equal to the preset difference value, the solution result may be considered to have converged).

Step 20425: outputting the result commodity combination, in response to the result commodity combination satisfying the preset condition.

In the present embodiment, the executing body may output the result commodity combination, in response to determining that the result commodity combination satisfies the preset condition.

In some optional implementations of the present embodiment, the processing steps may further include:
Step 2043: using, in response to the result commodity combination failing to satisfy the preset condition, the result commodity combination as a new first commodity combination, and continuing to execute the processing sub-steps (from step 20421 to step 20425) by using the new first commodity set. Thus, the executing body may cyclically select an associated commodity from the associated commodity set to replace a commodity in the first commodity combination, until obtaining a result commodity combination that satisfies the preset condition.

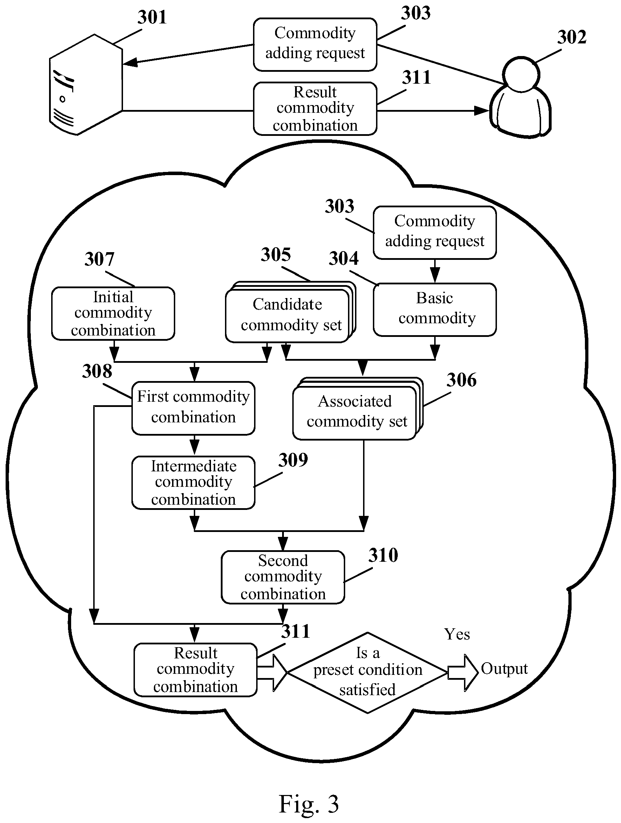

Further referring to Fig. 3, Fig. 3 is a schematic diagram of an application scenario of the method for outputting information according to the present embodiment.

In the application scenario of Fig. 3, in response to receiving a commodity adding request 303 sent by a user 302 for a participation condition (e.g., a total order price being CNY 499 or more) of a target promotion (e.g., a mid-year large-scale promotion), a server 301 may first acquire a basic commodity 304 (e.g., a down coat of brand A) included in the commodity adding request 303.

Then, the server 301 may acquire a predetermined candidate commodity set 305 participating in the target promotion.

Then, the server 301 may acquire associated commodities associated with the basic commodity 304 from the candidate commodity set 305 to form an associated commodity set 306.

Then, the server 301 may acquire a preset initial commodity combination 307 (e.g., a commodity combination with no commodity), and execute the following processing steps: selecting a candidate commodity from the candidate commodity set 305 and adding the selected candidate commodity to the initial commodity combination 307 to obtain a first commodity combination 308, such that an order including the first commodity combination 308 and the basic commodity 304 satisfies the participation condition; and executing the following processing sub-steps based on the first commodity combination 308: deleting a commodity from the first commodity combination 308 to obtain an intermediate commodity combination 309; selecting an associated commodity from the associated commodity set 306 and adding the selected associated commodity to the intermediate commodity combination 309 to obtain a second commodity combination 310, such that an order including the second commodity combination 310 and the basic commodity 304 satisfies the participation condition; selecting one of the first commodity combination 308 and the second commodity combination 310 as a result commodity combination 311; determining whether the result commodity combination 311 satisfies a preset condition; and outputting the result commodity combination 311 to the user 302, in response to the result commodity combination satisfying the preset condition.

With the method provided in the above embodiments of the present disclosure, it is possible to determine, based on a basic commodity of a user, a commodity combination that satisfies a preset condition for the user by iteration, thereby reducing human resource consumption and improving an efficiency and automation degree of order generation. Further, it is possible to add, in the iteration process, a commodity associated with the basic commodity selected by the user to the commodity combination, thereby generating a commodity combination better satisfying the user preference, and facilitating to improve a conversion rate of the commodity combination recommended to the user.

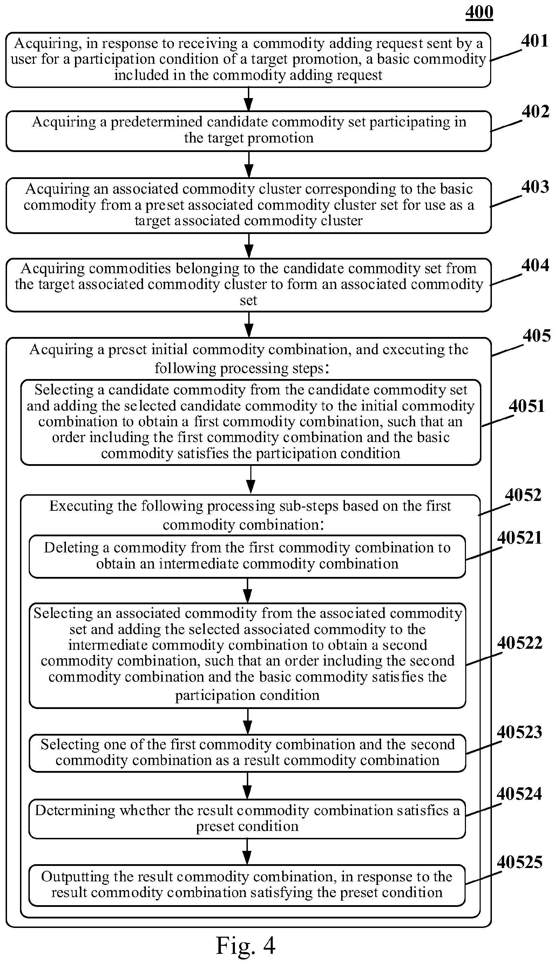

Further referring to Fig. 4, a process 400 of the method for outputting information according to another embodiment is shown. The process 400 of the method for outputting information includes the following steps.

Step 401: acquiring, in response to receiving a commodity adding request sent by a user for a participation condition of a target promotion, a basic commodity included in the commodity adding request.

In the present embodiment, an executing body (e.g., the server shown in Fig. 1) of the method for outputting information may acquire, in response to receiving the commodity adding request sent by the user for the participation condition of the target promotion through a wired connection or a wireless connection, the basic commodity included in the commodity adding request.

In the present embodiment, the target promotion may be a promotion in which the basic commodity is currently participating. The basic commodity may be a commodity which that the user desires to order. The participation condition of the target promotion may be a predetermined condition for the target promotion. The commodity adding request includes the basic commodity, and is used to request the executing body to add a further commodity to the order including the basic commodity, such that the order obtained after the further commodity being added satisfies the participation condition of the target promotion.

Step 402: acquiring a predetermined candidate commodity set participating in the target promotion.

In the present embodiment, the executing body may acquire the candidate commodity set participating in the target promotion remotely or locally through a wired connection or a wireless connection. The candidate commodity set may be a commodity set predetermined for the target promotion.

Step 403: acquiring an associated commodity cluster corresponding to the basic commodity from a preset associated commodity cluster set, for using as a target associated commodity cluster.

In the present embodiment, the executing body may acquire the preset associated commodity cluster set, and acquire the associated commodity cluster corresponding to the basic commodity from the preset associated commodity cluster set, for using as the target associated commodity cluster. The preset associated commodity cluster set may be a set composed of associated commodity clusters predetermined based on an order information set within a target historical period. The target historical period may be a historical period (for example, the last three months) with a time point at which the associated commodity cluster is determined as an end point, and with a duration being a preset duration, or may be a preset historical period (for example, the year of 2018). Each piece of order information in the order information set may correspond to an actual order. The order information may include various information of the corresponding actual order, for example, commodity information of a commodity in the corresponding actual order, user information of a user initiating the actual order, and the like. The associated commodity cluster includes at least two commodities, and there is an association between every two commodities in the associated commodity cluster. The associated commodity cluster corresponding to the basic commodity may be an associated commodity cluster to which the basic commodity belongs, or may be an associated commodity cluster to which a commodity similar to the basic commodity (e.g., a commodity in the same category as the basic commodity) belongs.

In practice, the associated commodity cluster may be determined based on the order information set by various approaches. For example, commodities belonging to the same order may be determined based on the order information set, and the commodities belonging to the same order may be determined as the associated commodity cluster.

In some optional implementations of the present embodiment, the associated commodity cluster in the preset associated commodity cluster set may be obtained by the executing body or other electronic devices through the following steps.

First, acquiring the order information set within the target historical period.

Then, generating an undirected weighted graph based on the acquired order information set. The undirected weighted graph includes nodes and edges for connecting the nodes. The node is used for representing a commodity in the order corresponding to the order information. The edge is used for representing that at least one user ordered two commodities represented by two nodes connected by the edge within the target historical period. A weight of the edge may be determined based on the number of the two commodities ordered by the user. Specifically, the weight of the edge may be determined based on the number of the ordered two commodities by various approaches. For example, the number of items of the ordered two commodities may be summed, and then a summing result may be directly determined as the weight; or the summing result may be multiplied by a preset coefficient, and a multiplying result may be determined as the weight.

It should be noted that, in practice, in a process of generating the undirected weighted graph, a time limit may be set for an edge between two nodes. Specifically, for two nodes, the two nodes may be connected by an edge only when a time difference between time points of ordering the two commodities represented by the two nodes by a user is less than or equal to a preset duration. It is understandable that the shorter the time difference between time points of ordering the two commodities is, the stronger the association between the two commodities may be.

Then, executing the following retrieve steps based on the undirected weighted graph: retrieving a complete subgraph from the undirected weighted graph; removing the retrieved complete subgraph from the undirected weighted graph to obtain a new undirected weighted graph; determining whether the new undirected weighted graph includes a complete subgraph; and using, in response to the new undirected weighted graph including no complete subgraph, the retrieved complete subgraph to form a complete subgraph set.

Further, continuing, in response to the new undirected weighted graph including a complete subgraph, to execute the retrieve steps based on the new undirected weighted graph.

Here, any two nodes of nodes included in the complete subgraph are connected by an edge.

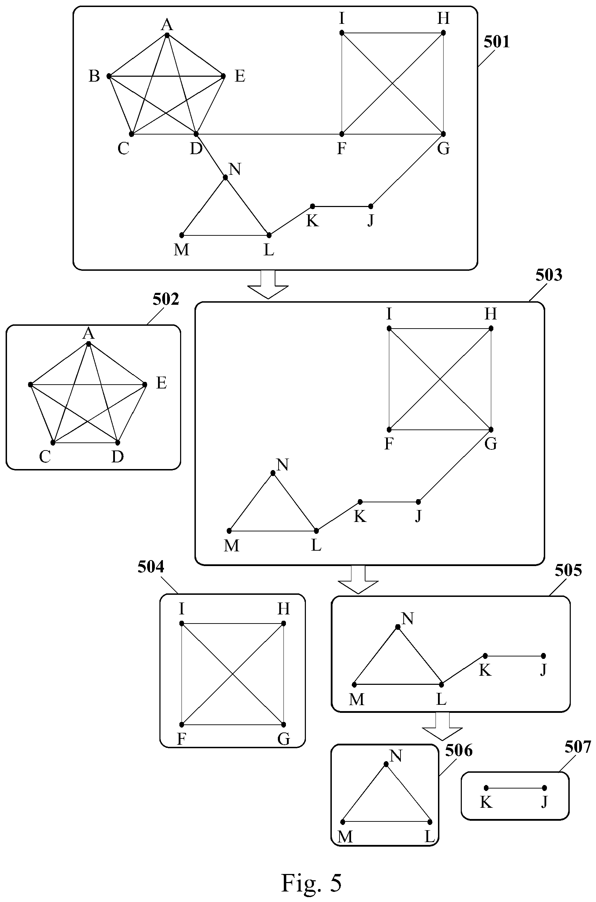

Specifically, the executing body or other electronic devices may retrieve a complete subgraph from the undirected weighted graph based on features of the above complete subgraph. As an example, referring to Fig. 5, Fig. 5 provides a schematic diagram of retrieving a complete subgraph from an undirected weighted graph. 501 in the figure may be an undirected weighted graph generated based on an order information set. Then, the above executing body or other electronic devices may first retrieve a complete subgraph from the undirected weighted graph 501, and remove the retrieved complete subgraph from the undirected weighted graph 501, to obtain a complete subgraph 502 and a new undirected weighted graph 503. Then, a complete subgraph may be retrieved for from the undirected weighted graph 503, and the retrieved complete subgraph may be removed from the undirected weighted graph 503, to obtain a complete subgraph 504 and a new undirected weighted graph 505. Then, a complete subgraph may be retrieved from the undirected weighted graph 505, and the retrieved complete subgraph may be removed from the undirected weighted graph 505, to obtain a complete subgraph 506 and a complete subgraph 507. Thus, in this example, 4 complete subgraphs may be obtained, namely the complete subgraph 502, the complete subgraph 504, the complete subgraph 506, and the complete subgraph 507.

Finally, using, for a complete subgraph in the obtained complete subgraph set, commodities corresponding to nodes in the complete subgraph to form the associated commodity cluster.

Specifically, further referring to the above example in Fig. 5, for the obtained complete subgraph 502, complete subgraph 504, complete subgraph 506, and complete subgraph 507, five commodities corresponding to nodes A, B, C, D, and E in the complete subgraph 502 may be combined into an associated commodity cluster; four commodities corresponding to nodes H, I, F, and G in the complete subgraph 504 may be combined into an associated commodity cluster; three commodities corresponding to nodes M, N, and L in the complete subgraph 506 may be combined into an associated commodity cluster; and two commodities corresponding to nodes K and J in the complete subgraph 507 may be combined into an associated commodity cluster.

It is understandable that any two nodes in a complete subgraph are connected by an edge, which may indicate that there is an association between any two commodities represented by nodes included in the complete subgraph. Therefore, commodities corresponding to the nodes in the complete subgraph may be used to form an associated commodity cluster.

Step 404: acquiring commodities belonging to the candidate commodity set from the target associated commodity cluster to form an associated commodity set.

In the present embodiment, based on the target associated commodity cluster obtained in step 403 and the candidate commodity set obtained in step 402, the executing body may acquire commodities belonging to the candidate commodity set from the target associated commodity cluster to form the associated commodity set.

Step 405: acquiring a preset initial commodity combination, and executing the following processing steps.

In the present embodiment, the executing body may acquire the preset initial commodity combination, and execute the following processing steps (from step 4051 to step 4052).

Step 4051: selecting a candidate commodity from the candidate commodity set and adding the selected candidate commodity to the initial commodity combination to obtain a first commodity combination, such that an order including the first commodity combination and the basic commodity satisfies the participation condition.

In the present embodiment, the executing body may select, based on the candidate commodity set obtained in step 402 and the above initial commodity combination, a candidate commodity from the candidate commodity set and add the selected candidate commodity to the initial commodity combination to obtain the first commodity combination, such that the order including the first commodity combination and the basic commodity satisfies the participation condition corresponding to the target promotion. The initial commodity combination may be a preset combination.

Step 4052: executing the following processing sub-steps based on the first commodity combination.

In the present embodiment, the executing body may execute the following processing steps (from step 40521 to step 40525) based on the first commodity combination obtained in step 4051.

Step 40521: deleting a commodity from the first commodity combination to obtain an intermediate commodity combination.

Step 40522: selecting an associated commodity from the associated commodity set and adding the selected associated commodity to the intermediate commodity combination to obtain a second commodity combination, such that an order including the second commodity combination and the basic commodity satisfies the participation condition.

Step 40523: selecting a result commodity combination from the first commodity combination and the second commodity combination.

Step 40524: determining whether the result commodity combination satisfies a preset condition.

In the present embodiment, the executing body may determine whether the result commodity combination satisfies the preset condition based on the result commodity combination obtained in step 40523. The preset condition may be various conditions preset by a technician.

In some optional implementations of the present embodiment, the executing body may determine whether the result commodity combination satisfies the preset condition through the following steps: first, the executing body may determine an association degree value for representing an association degree between a commodity in the result commodity combination and the basic commodity. Then, the executing body may determine whether the result commodity combination satisfies the preset condition based on the determined association degree value.

Specifically, the executing body may determine an association degree value between a commodity in the result commodity combination and the basic commodity by various approaches. As an example, the executing body may determine an association degree value between a commodity in the result commodity combination and the basic commodity by a manner based on a category with three levels described in the corresponding embodiment of Fig. 2; or, for each commodity in the result commodity combination, the executing body may retrieve an edge connecting the commodity and the basic commodity from the undirected weighted graph, and then determine the association degree value between the commodity and the basic commodity based on a weight of the retrieved edge. Here, based on the weight of the retrieved edge, the executing body may determine the association degree value by various approaches. For example, the executing body may directly determine the weight as the association degree value, or obtain the association degree value by multiplying the weight by a preset coefficient (the preset coefficient is greater than 0).

In the preset implementation, based on the determined association degree value between each commodity in the result commodity combination and the basic commodity, the executing body may first determine an association degree value corresponding to the result commodity combination (for example, may perform a summing calculation on association degree values corresponding to the commodities, to obtain the association degree value corresponding to the result commodity combination). Then, the executing body may determine whether the result commodity combination satisfies the preset condition based on the association degree value corresponding to the result commodity combination by various approaches. Specifically, as an example, the executing body may determine whether the association degree value corresponding to the result commodity combination is greater than or equal to a preset association degree threshold. The executing body may determine, if the association degree value corresponding to the result commodity combination is greater than or equal to the preset association degree threshold, that the result commodity combination satisfies the preset condition. The executing body may determine, if the association degree value corresponding to the result commodity combination is less than the preset association degree threshold, that the result commodity combination fails to satisfy the preset condition. Alternatively, the executing body may determine whether a difference between an association degree value of the result commodity combination obtained this time and an association degree value of the result commodity combination obtained last time is less than or equal to a preset difference value. The executing body may determine, if the difference between the association degree value of the result commodity combination obtained this time and the association degree value of the result commodity combination obtained last time is less than or equal to the preset difference value, that the result commodity combination obtained this time satisfies the preset condition. The executing body may determine, if the difference between the association degree value of the result commodity combination obtained this time and the association degree value of the result commodity combination obtained last time is greater than the preset difference value, that the result commodity combination obtained this time fails to satisfy the preset condition.

In some optional implementations of the present embodiment, before step 40524, the executing body may further determine a quality value for representing a quality of a commodity in the result commodity combination; and the executing body may determine whether the result commodity combination satisfies the preset condition based on the determined association degree value and the determined quality value.

In practice, the executing body may determine a quality value for representing a quality of a commodity by various approaches. For example, the executing body may obtain the number of favorable feedbacks and the number of negative feedbacks corresponding to the commodity by statistic, and then determine the quality value of the commodity based on the number of favorable feedbacks and the number of negative feedbacks. Alternatively, the executing body may obtain, e.g., the number of times of browsing the commodity and the number of times of ordering the commodity by statistic, and then determine the quality value of the commodity based on, e.g., the number of times of browsing the commodity and the number of times of ordering the commodity.

Specifically, the executing body may first determine, based on a quality value of each commodity in the result commodity combination, a quality value corresponding to the result commodity combination (for example, the executing body may perform summing calculation on the quality values corresponding to the commodities, to obtain the quality value corresponding to the result commodity combination), and then determine whether the result commodity combination satisfies the preset condition based on the above obtained association degree value and the quality value corresponding to the result commodity combination.

Here, the executing body may determine whether the result commodity combination satisfies the preset condition based on the association degree value and the quality value corresponding to the result commodity combination by various approaches. Specifically, as an example, the executing body may determine whether the association degree value corresponding to the result commodity combination is greater than or equal to the preset association degree threshold, and whether the quality value is greater than or equal to a quality threshold. The executing body may determine, if the association degree value corresponding to the result commodity combination is greater than or equal to the preset association degree threshold, and the quality value is greater than or equal to the quality threshold, that the result commodity combination satisfies the preset condition. Otherwise, the executing body may determine, if any one of the association degree value corresponding to the result commodity combination, and the quality value is less than a preset threshold (the preset association degree threshold or the preset quality threshold), that the result commodity combination fails to satisfy the preset condition. Alternatively, the executing body may perform summing calculation on the association degree value and the quality value corresponding to the result commodity combination, to obtain a result value, then the executing body may determine whether a difference between a result value obtained this time and a result value corresponding to the result commodity combination obtained last time is less than or equal to a preset difference value. The executing body may determine, if the difference between the result value obtained this time and the result value corresponding to the result commodity combination obtained last time is less than or equal to the preset difference value, that the result commodity combination obtained this time satisfies the preset condition. Otherwise, the executing body may determine that the result commodity combination obtained this time fails to satisfy the preset condition.

Step 40525: outputting the result commodity combination, in response to the result commodity combination satisfying the preset condition.

The above step 401, step 402, and step 405 may be executed by approaches similar to the approaches for executing step 201, step 202, and step 204 in the above embodiment, respectively. The above description on step 201, step 202, and step 204 also apply to step 401, step 402, and step 405, and will not be repeated here.

As can be seen from Fig. 4, compared with the corresponding embodiment of Fig. 2, the process 400 of the method for outputting information in the present embodiment highlights a step of determining an associated commodity set using a target associated commodity cluster corresponding to a basic commodity in a preset associated commodity cluster set. Therefore, the solution described in the present embodiment provides a new approach of determining an associated commodity set, thereby facilitating to improve the diversity of information output. Further, in the present embodiment, the preset associated commodity cluster set for determining the associated commodity set is determined based on order information within a target historical period, and includes actual behavior characteristics of a user, such that an association between commodities included in the preset associated commodity cluster set is more in line with an actual application scenario. Then, a more objective and effective associated commodity set can be determined based on the preset associated commodity cluster set, thereby facilitating to output a more objective and effective result commodity combination.

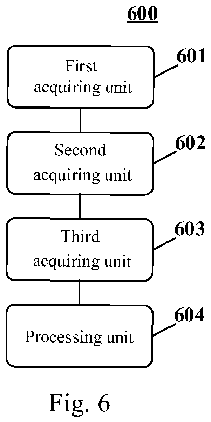

Further referring to Fig. 6, as an implementation of the method shown in the above figures, an embodiment of the present disclosure provides an apparatus for outputting information. The embodiment of the apparatus corresponds to the embodiment of the method shown in Fig. 2. The apparatus may be specifically applied to various electronic devices.

As shown in Fig. 6, the apparatus 600 for outputting information of the present embodiment includes: a first acquiring unit 601, a second acquiring unit 602, a third acquiring unit 603, and a processing unit 604. The first acquiring unit 601 is configured to acquire, in response to receiving a commodity adding request sent by a user for a participation condition of a target promotion, a basic commodity included in the commodity adding request; the second acquiring unit 602 is configured to acquire a predetermined candidate commodity set participating in the target promotion; the third acquiring unit 603 is configured to acquire associated commodities associated with the basic commodity from the candidate commodity set to form an associated commodity set; and the processing unit 604 is configured to acquire a preset initial commodity combination, and execute the following processing steps: selecting a candidate commodity from the candidate commodity set and adding the selected candidate commodity to the initial commodity combination to obtain a first commodity combination, such that an order including the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order including the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

In the present embodiment, the first acquiring unit 601 of the apparatus 600 for outputting information may acquire, in response to receiving the commodity adding request sent by the user for the participation condition of the target promotion through a wired connection or a wireless connection, the basic commodity included in the commodity adding request.

In the present embodiment, the target promotion may be a promotion in which the basic commodity is currently participating. The basic commodity may be a commodity the user desires to order. The participation condition of the target promotion may be a predetermined condition for the target promotion. The commodity adding request includes the basic commodity, and is used to request the apparatus 600 to add a further commodities to the order including the basic commodity, such that the order obtained after adding the further commodities satisfies the participation condition of the target promotion.

In the present embodiment, the second acquiring unit 602 may acquire the candidate commodity set participating in the target promotion remotely or locally through wired connection or wireless connection. The candidate commodity set may be a commodity set predetermined for the target promotion.

In the present embodiment, based on the basic commodity obtained by the first acquiring unit 601 and the candidate commodity set obtained by the second acquiring unit 602, the third acquiring unit 603 may acquire the associated commodities associated with the basic commodity from the candidate commodity set to form the associated commodity set. The associated commodities associated with the basic commodity may be commodities that have an association with the basic commodity.

In the present embodiment, the processing unit 604 may acquire the preset initial commodity combination, and execute the following processing steps (from step 6041 to step 6042) .

Step 6041: selecting a candidate commodity from the candidate commodity set and adding the selected candidate commodity to the initial commodity combination to obtain a first commodity combination, such that an order including the first commodity combination and the basic commodity satisfies the participation condition.

In the present embodiment, the processing unit 604 may select, based on the candidate commodity set obtained by the second acquiring unit 602 and the initial commodity combination, a candidate commodity from the candidate commodity set and add the selected candidate commodity to the initial commodity combination to obtain the first commodity combination, such that the order including the first commodity combination and the basic commodity satisfies the participation condition corresponding to the target promotion. The initial commodity combination may be a preset combination.

Step 6042: executing processing sub-steps based on the first commodity combination.

In the present embodiment, the processing unit 604 may execute the following processing sub-steps (from step 60421 to step 60425) based on the first commodity combination obtained in step 6041:

Step 60421: deleting a commodity from the first commodity combination to obtain an intermediate commodity combination.

Step 60422: selecting an associated commodity from the associated commodity set and adding the selected associated commodity to the intermediate commodity combination to obtain a second commodity combination, such that an order including the second commodity combination and the basic commodity satisfies the participation condition.

Step 60423: selecting one of the first commodity combination and the second commodity combination as a result commodity combination.

Step 60424: determining whether the result commodity combination satisfies a preset condition.

In the present embodiment, the processing unit 604 may determine whether the result commodity combination satisfies the preset condition based on the result commodity combination obtained in step 60423. The preset condition may be various conditions preset by a technician.

Step 60425: outputting the result commodity combination, in response to the result commodity combination satisfying the preset condition.

In some optional implementations of the present embodiment, the processing steps further include: using, in response to the result commodity combination failing to satisfy the preset condition, the result commodity combination as a new first commodity combination, and continuing to execute the processing sub-steps using the new first commodity set.

In some optional implementations of the present embodiment, the third acquiring unit 603 may include: a determining module (not shown in the figure) configured to determine a category of the basic commodity; and a first acquiring module (not shown in the figure) configured to acquire commodities corresponding to a category associated with the category of the basic commodity from the candidate commodity set to form the associated commodity set.

In some optional implementations of the present embodiment, the third acquiring unit 603 may include: a second acquiring module (not shown in the figure) configured to acquire an associated commodity cluster corresponding to the basic commodity from a preset associated commodity cluster set, for using as a target associated commodity cluster, where the preset associated commodity cluster set is a set composed of associated commodity clusters predetermined based on an order information set within a target historical period; and a third acquiring module (not shown in the figure) configured to acquire commodities belonging to the candidate commodity set from the target associated commodity cluster to form the associated commodity set.

In some optional implementations of the present embodiment, the associated commodity cluster in the preset associated commodity cluster set is obtained through the following steps: acquiring the order information set within the target historical period; generating an undirected weighted graph based on the acquired order information set, where the undirected weighted graph includes nodes and an edge for connecting the nodes, the node is used for representing a commodity in an order, and an edge is used for representing that at least one user ordered two commodities connected by an edge within the target historical period, and a weight of the edge is determined based on the number of the two commodities ordered by the user; executing the following retrieve steps based on the undirected weighted graph: retrieving a complete subgraph from the undirected weighted graph, where any two nodes among nodes included in the complete subgraph are connected by an edge; removing the found complete subgraph from the undirected weighted graph to obtain a new undirected weighted graph; determining whether the new undirected weighted graph includes a complete subgraph; and using, in response to the new undirected weighted graph including no complete subgraph, the found complete subgraph to form a complete subgraph set; continuing, in response to the new undirected weighted graph including a complete subgraph, to execute the retrieve steps based on the new undirected weighted graph; and using, for a complete subgraph in the obtained complete subgraph set, commodities corresponding to the nodes in the complete subgraph to form the associated commodity cluster.

In some optional implementations of the present embodiment, the processing unit 604 may be further configured to: determine an association degree value for representing an association degree between a commodity in the result commodity combination and the basic commodity; and determine whether the result commodity combination satisfies the preset condition based on the determined association degree value.

In some alternative implementations of the present embodiment, the processing unit 604 may be further configured to: determine a quality value for representing a quality of the commodity in the result commodity combination; and determine whether the result commodity combination satisfies the preset condition based on the determined association degree value and the determined quality value.

It is understandable that the units disclosed in the apparatus 600 correspond to the steps in the method described with reference to Fig. 2. Therefore, the operations, features, and resulting benefiting effects described above for the method also apply to the apparatus 600 and the units included therein. The description will not be repeated here.

With the apparatus 600 provided in the above embodiments of the present disclosure, it is possible to determine, based on a basic commodity of a user, a commodity combination that satisfies a preset condition for the user by iteration, thereby reducing the human resource consumption and improving the efficiency and automation degree of order generation; and to add, in the iteration process, a commodity associated with the basic commodity selected by the user to the commodity combination, thereby generating a commodity combination better satisfying the user preference, and facilitating to improve the conversion rate of the commodity combination recommended to the user.

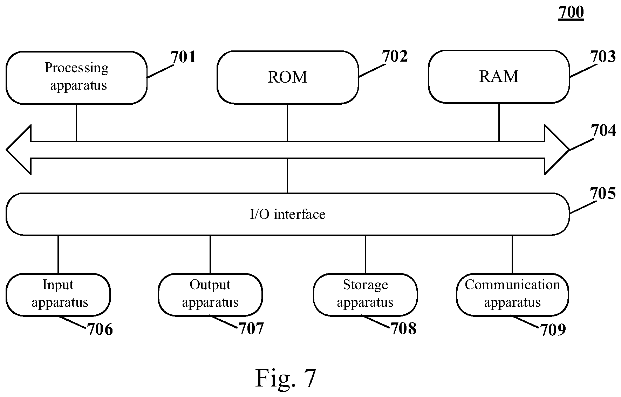

Referring to Fig. 7 below, a schematic structural diagram of a server (e.g., the server in Fig. 1) 700 adapted to implement embodiments of the present disclosure is shown. The server shown in Fig. 7 is merely an example, and should not impose any limitation on the functions and scope of use of embodiments of the present disclosure.

As shown in Fig. 7, the electronic device 700 may include a processing apparatus 701 (e.g., a central processing unit or a graphics processing unit), which may execute various appropriate actions and processes in accordance with a program stored in a read only memory (ROM) 702 or a program loaded into a random-access memory (RAM) 703 from a storage apparatus 708. The RAM 703 further stores various programs and data required by operations of the electronic device 700. The processing apparatus 701, the ROM 702, and the RAM 703 are connected to each other through a bus 704. An input/output (I/O) interface 705 is also connected to the bus 704.

In general, the following apparatuses may be connected to the I/O interface 705: an input apparatus 706 including a touch screen, a touch pad, a keyboard, a mouse, a camera, a microphone, an accelerometer, a gyroscope, or the like; an output apparatus 707 including a liquid crystal display device (LCD), a speaker, a vibrator, or the like; a storage apparatus 708 including a magnetic tape, a hard disk, or the like; and a communication apparatus 709. The communication apparatus 709 may allow the electronic device 700 to exchange data with other devices through wireless or wired communication. While Fig. 7 shows the electronic device 700 having various apparatuses, it should be understood that it is not necessary to implement or provide all of the apparatuses shown in the figure. More or fewer apparatuses may be alternatively implemented or provided.

In particular, according to the embodiments of the present disclosure, the process described above with reference to the flow chart may be implemented as a computer software program. For example, the embodiments of the present disclosure include a computer program product, which includes a computer program that is tangibly embedded in a computer readable medium. The computer program includes a program code for executing the method as shown in the flow chart. In such an embodiment, the computer program may be downloaded and installed from a network via the communication apparatus 709, or be installed from the storage apparatus 708, or be installed from the ROM 702. The computer program, when executed by the processing apparatus 701, executes the functions as defined in the method of the embodiments of the present disclosure.

It should be noted that the computer readable medium according to the present disclosure may be a computer readable signal medium or a computer readable storage medium, or any combination of the above two. An example of the computer readable storage medium may include, but is not limited to: electric, magnetic, optical, electromagnetic, infrared, or semiconductor systems, apparatuses, elements, or a combination of any of the above. A more specific example of the computer readable storage medium may include, but is not limited to: an electrical connection with one or more pieces of wire, a portable computer disk, a hard disk, a random-access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In the present disclosure, the computer readable storage medium may be any tangible medium containing or storing programs which may be used by, or used in combination with, a command execution system, apparatus or element. In the present disclosure, the computer readable signal medium may include a data signal in the base band or propagating as parts of a carrier wave, in which computer readable program codes are carried. The propagating data signal may take various forms, including but not limited to an electromagnetic signal, an optical signal, or any suitable combination of the above. The computer readable signal medium may also be any computer readable medium except for the computer readable storage medium. The computer readable signal medium is capable of transmitting, propagating or transferring programs for use by, or use in combination with, a command execution system, apparatus or element. The program code contained on the computer readable medium may be transmitted with any suitable medium, including but not limited to: wire, an optical cable, a RF (radio frequency) medium etc., or any suitable combination of the above.

The computer readable medium may be included in the above electronic device; or may be a stand-alone computer readable medium without being assembled into the electronic device. The computer readable medium carries one or more programs, where the one or more programs, when executed by the electronic device, cause the electronic device to: acquire, in response to receiving a commodity adding request sent by a user for a participation condition of a target promotion, a basic commodity included in the commodity adding request; acquire a predetermined candidate commodity set participating in the target promotion; acquire associated commodities associated with the basic commodity from the candidate commodity set to form an associated commodity set; and acquire a preset initial commodity combination, and execute the following processing steps: selecting a candidate commodity from the candidate commodity set and adding the selected candidate commodity to the initial commodity combination to obtain a first commodity combination, such that an order including the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order including the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

A computer program code for executing operations in the present disclosure may be compiled using one or more programming languages or combinations thereof. The programming languages include object-oriented programming languages, such as Java, Smalltalk or C++, and also include conventional procedural programming languages, such as "C" language, or similar programming languages. The program code may be completely executed on a user's computer, partially executed on a user's computer, executed as a separate software package, partially executed on a user's computer and partially executed on a remote computer, or completely executed on a remote computer or server. In the case where a remote computer is involved, the remote computer may be connected to a user computer through any kind of networks, including a local area network (LAN) or a wide area network (WAN), or may be connected to an external computer (for example, connected through the Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed substantially in parallel, or sometimes be executed in a reverse sequence, depending on the functions involved. It should also be noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in the embodiments of the present disclosure may be implemented by software, or may be implemented by hardware. The names of the units do not constitute a limitation to such units themselves in some cases. For example, the first acquiring unit may be further described as "a unit configured to acquire a basic commodity."

The above description only provides explanation of the preferred embodiments and the employed technical principles of the present disclosure. It should be appreciated by those skilled in the art that the scope of disclosure involved in the present disclosure is not limited to the technical solutions formed by the particular combinations of the above-described technical features, but should also cover other technical solutions formed by any combinations of the above-described technical features or equivalent features thereof without departing from the above-described concept of disclosure, for example, technical solutions formed by interchanging the above-described features with, but not limited to, technical features with similar functions disclosed in the present disclosure.

## Claims

1. A method for outputting information, comprising:
acquiring, in response to receiving a commodity adding request sent by a user for a participation condition of a target promotion, a basic commodity comprised in the commodity adding request;
acquiring a predetermined candidate commodity set participating in the target promotion;
acquiring associated commodities associated with the basic commodity from the candidate commodity set to form an associated commodity set; and
acquiring a preset initial commodity combination, and executing following processing steps: selecting a candidate commodity from the candidate commodity set and adding the selected candidate commodity to the initial commodity combination to obtain a first commodity combination, such that an order comprising the first commodity combination and the basic commodity satisfies the participation condition; and executing following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order comprising the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

2. The method according to claim 1, wherein the processing steps further comprise:
using, in response to the result commodity combination failing to satisfy the preset condition, the result commodity combination as a new first commodity combination, and continuing to execute the processing sub-steps by using the new first commodity set.

3. The method according to claim 1, wherein acquiring the associated commodities associated with the basic commodity from the candidate commodity set to form the associated commodity set comprises:
determining a category of the basic commodity; and
acquiring commodities corresponding to a category associated with the category of the basic commodity from the candidate commodity set to form the associated commodity set.

4. The method according to claim 1, wherein acquiring the associated commodities associated with the basic commodity from the candidate commodity set to form the associated commodity set comprises:
acquiring an associated commodity cluster corresponding to the basic commodity from a preset associated commodity cluster set, for using as a target associated commodity cluster, wherein the preset associated commodity cluster set is a set composed of associated commodity clusters predetermined based on an order information set within a target historical period; and
acquiring commodities belonging to the candidate commodity set from the target associated commodity cluster to form the associated commodity set.

5. The method according to claim 4, wherein an associated commodity cluster in the preset associated commodity cluster set is obtained through following steps:
acquiring the order information set within the target historical period;
generating an undirected weighted graph based on the acquired order information set, wherein the undirected weighted graph comprises nodes and edges for connecting the nodes, a node is used for representing a commodity in an order, and an edge is used for representing that at least one user ordered two commodities connected by the edge within the target historical period, and a weight of the edge is determined based on the number of the two commodities ordered by the user;
executing following retrieve steps based on the undirected weighted graph: retrieving a complete subgraph from the undirected weighted graph, wherein any two nodes of nodes comprised in the complete subgraph are connected by an edge; removing the retrieved complete subgraph from the undirected weighted graph to obtain a new undirected weighted graph; determining whether the new undirected weighted graph includes a complete subgraph; and using, in response to the new undirected weighted graph including no complete subgraph, the retrieved complete subgraph to form a complete subgraph set;
continuing, in response to the new undirected weighted graph including a complete subgraph, to execute the retrieve steps based on the new undirected weighted graph; and
using, for a complete subgraph in the formed complete subgraph set, commodities corresponding to nodes in the complete subgraph to form the associated commodity cluster.

6. The method according to any one of claims 1 to 5, wherein determining whether the result commodity combination satisfies the preset condition comprises:
determining an association degree value for representing an association degree between a commodity in the result commodity combination and the basic commodity; and
determining whether the result commodity combination satisfies the preset condition based on the determined association degree value.

7. The method according to claim 6, wherein before determining whether the result commodity combination satisfies the preset condition, the processing sub-steps further comprise:
determining a quality value for representing a quality of a commodity in the result commodity combination; and
determining whether the result commodity combination satisfies the preset condition comprises:
determining whether the result commodity combination satisfies the preset condition based on the determined association degree value and the determined quality value.

8. An apparatus for outputting information, comprising:
a first acquiring unit configured to acquire, in response to receiving a commodity adding request sent by a user for a participation condition of a target promotion, a basic commodity comprised in the commodity adding request;
a second acquiring unit configured to acquire a predetermined candidate commodity set participating in the target promotion;
a third acquiring unit configured to acquire associated commodities associated with the basic commodity from the candidate commodity set to form an associated commodity set; and
a processing unit configured to acquire a preset initial commodity combination, and execute following processing steps: selecting a candidate commodity from the candidate commodity set and adding the selected candidate commodity to the initial commodity combination to obtain a first commodity combination, such that an order comprising the first commodity combination and the basic commodity satisfies the participation condition; and executing the following processing sub-steps based on the first commodity combination: deleting a commodity from the first commodity combination to obtain an intermediate commodity combination; selecting an associated commodity from the associated commodity set and adding the selected associated commodity to the intermediate commodity combination to obtain a second commodity combination, such that an order comprising the second commodity combination and the basic commodity satisfies the participation condition; selecting one of the first commodity combination and the second commodity combination as a result commodity combination; determining whether the result commodity combination satisfies a preset condition; and outputting the result commodity combination, in response to the result commodity combination satisfying the preset condition.

9. A server, comprising:
one or more processors; and
a storage apparatus, storing one or more programs thereon,
the one or more programs, when executed by the one or more processors, causing the one or more processors to implement the method according to any one of claims 1-7.

10. A computer readable medium, storing a computer program thereon, wherein the program, when executed by a processor, implements the method according to any one of claims 1 to 7 .
